# EUROPEAN PATENT SPECIFICATION

(11) **EP 0 482 706 B1**
(45) Date of publication and mention of the grant of the patent: **07.01.1999**
(21) Application number: 91202698.6
(22) Date of filing: 17.10.1991
(51) Int. Cl.: G06F 12/08

(54) **Method for intelligent data cache prefetching, and computer for implementing this method**
Verfahren für Datenvorgriff in Cache-Speicher und Rechner zu dessen Durchführung
Procédé de préextraction de données en antémémoire et ordinateur pour la mise en oeuvre de ce procédé

(30) Priority: 24.10.1990 US 605212
(43) Date of publication of application: 29.04.1992
(73) Proprietor: Koninklijke Philips Electronics N.V., 5621 BA Eindhoven (NL)
(72) Inventor: Chi, Chi-Hung, NL-5656 AA Eindhoven (NL)
(74) Representative: de Haas, Laurens Johan

(56) References cited:
- EP-A- 0 205 193
- EP-A- 0 357 188
- US-A- 4 371 927
- IBM TECHNICAL DISCLOSURE BULLETIN vol. 15, no. 4, September 1972, NEW YORK US pages 1100 - 1101 SEKALAY 'Storage Hierarchy Control System'
- IBM TECHNICAL DISCLOSURE BULLETIN vol. 32, no. 7, December 1989, NEW YORK US pages 274 - 275 'Cache Miss Leading Edge Processing'

## Description

The invention relates to a computer and a method of operating a computer as described in the precharacterizing parts of claims 1 and 4 respectively. Such a computer and method are known from a publication Titled "Storage hierarchy control system" by F.E.Sakalay and published in the IBM technical disclosure bulletin Vol. 15 No.4 (September 1972) page 1100 and 1101. This publication describes a computer architecture which permits an efficient exchange of data between a relatively fast processor and a relatively slow memory. Storage demands of the CPU are anticipated by moving blocks of data into cache memory before the data is actually needed for execution. To achieve this the address of data needed by an instruction is evaluated in advance. Sometimes this is impossible because the address of the data depends on the contents of a register that may be updated between the time that the instruction is analyzed and the time that the instruction referring to the data is actually executed. The publication proposes to disable look-ahead or flagging such instructions. Thus no way of anticipating storage demands is described for such instructions.

From European patent application No. 205 193 it is known to execute a program of instructions. Several instructions can be executed in parallel, provided that these instructions do not require an operand that is produced by instructions that still need to complete execution. Execution of programmed instructions that need such an operand from a register is delayed until the content of the register has been computed. A counter counts the time until the operand is available and triggers the start of the programmed instruction. In this way storage demands are also not anticipated.

Rapid advances in integrated circuit technology and in computer architecture have resulted in an increasing "memory reference delay gap" between relatively fast processing units and relatively slow memory. High performance processor chips with maximum throughput over 100 MIPS are available as commercial products. Multiprocessor systems using these processor chips as their processing units can also be implemented. However, the memory system needed to support these high performance systems to run at their peak speed is either too complex or too expensive to be built. As a result, the performance bottleneck of many current high performance computer systems may not be the speed of their processing units, but rather the efficiency of the memory system. To solve this problem, in US Patent No. 4,811,215, a computer is described with cache memories for data and for instructions.

Cache memory is a high speed buffer memory between the central processing unit and main memory of a computer system, which responds to memory access attempts by the processor, and handles such attempts without having to wait for the main memory if the accessed data is available in the cache memory. Only if such data is not availabe, a cache miss is said to occur, and the data will have to be fetched from main memory, after which it is usually also placed in the cache. The purpose is to obtain high speed data/instruction accesses without the associated cost of building primary memory entirely using high speed technology. Cache memories are currently used in most computer systems, ranging from microprocessor chips to super computers. in future systems, cache effectiveness will be increasingly critical because processor computation speed is increasing at a much faster rate than memory access time.

In order to overcome the problem of increasingly large memory reference delay gaps between the fast processing units and slow memory, the prior art teaches a technique known as "cache prefetching" in which references are brought into the cache memory before they are actually needed. If the prefetching is correct, long memory reference delay times can be overlapped (partially or completely) with program execution. Thus, the number of cache misses causing the processing unit to wait can be reduced.

In cache prefetching memory cycles which would otherwise be idle are used for copying data and instructions into the cache. Some of the most commonly used prior art cache prefetching techniques are:
ONE BLOCK LOOK-AHEAD - when cache block i is referenced and is not in the cache (i.e. a cache miss occurs), cache block i and cache block i+l are both fetched into the cache;
CACHE BLOCK SIZE GREATER THAN ONE - when a cache with block size greater than one is used, more than one item are fetched into the cache upon a cache miss which is due to the reference of only one item within the block that is fetched; and
ALWAYS PREFETCHING - for every memory reference in block i, block i+l is prefetched into the cache if it is not already in the cache.

As used herein, "cache block size" is defined as the basic unit of information transfer between the cache and the main memory. A "basic block" is defined as a sequence of code instructions with one entry point and one exit point.

The rationale for all these prefetching techniques is based on the spatial locality of the references, that is the loci of references of a program in the near future are assumed to be likely to be near the current loci of a reference. They make an assumption that memory accesses have the property of sequential order of referencing. In instruction caches, these prefetching techniques usually perform well because instruction references usually have the sequential reference behavior. For example, within a basic block, instructions are always referenced sequentially. Usually, the cache hit ratio is improved and the bus traffic is increased in instruction cache prefetching. As used herein, the term "cache hit ratio" is defined as the probability that a data item request by a processor unit will be found in cache memory.

However, sequential prefetching schemes lose their effectiveness in data cache designs, because all of these techniques are primarily designed for instruction cache and their rationale are based on the reference behavior of instructions. Since the reference behavior of data, which is somewhat random, it is quite different from the reference behavior of instructions, which is sequential, applying prefetching schemes which are designed for sequential references to data caches is much less effective. The chance for the prefetched data to be referenced during the period it is in the cache is much lower in data caches than in instruction caches: unreferenced data is called cache pollution and decreases the overall machine performance, both by occupying useful cache space and by causing an increase in bus traffic. In systems where bus bandwidth is a limited resource, bus contention (i.e. a situation where there are more requests trying to use the data bus than the bus can simultaneously serve) machine performance will be further deteriorated. If the bus is busy prefetching non-referenced data other requests to use the bus (e.g. instruction fetching) will be delayed. This occurs very often in high performance processor chips where the processing speed can be very fast but the bus bandwidth is limited by its physical constraints, for example the total number of pins on the chip. Moreover, due to the limited space for data caches, pollution in data caches means that data in a cache which is going to be referenced shortly might be replaced by the "non-referenced prefetched data", resulting in cache misses. Unless there is some way to obtain a better idea of how data is referenced, cache data prefetching will not be very useful.

Another technique described in the above-mentioned patent is the continuation of program execution after load instructions before the loaded data has actually arrived. To gain execution speed using this technique, one may try to hide memory access time from program execution by scheduling of LOAD instructions of a program with the compiler. In some RISC (Reduced Instruction Set Computer) architectures, the compiler tries to schedule the LOAD instruction of a datum i so that the time between the load for i and the first use of datum i is at least greater than the time needed to fetch datum i from the memory. In an ideal situation, all LOAD instructions can be scheduled in this way and all memory reference delay time can be invisible to program execution. Data are prefetched into registers (in contrast to the data cache) before they are needed with the help of the compiler and both the data cache and its prefetching scheme seem to be unnecessary. However, in practice, this is not true for the following reasons.

First, even if the compiler can schedule all LOAD instructions so that the time between the LOAD for datum i and the first use of datum i is greater than the memory access time for datum i, the problem of bus traffic still remains. Due to the limited number of registers available to the system, registers have to be reused and store only those values that are going to be referenced in the immediate future. In other words, data still have to be fetched from main memory when they are needed. Good register allocation schemes might be able to overlap memory access delay times with program execution time, but it cannot eliminate most of the bus traffic. Since the register file is too small to serve as backup storage for data that might be referenced far away from the current execution point, a data cache is still necessary to reduce bus traffic.

Second, overlapping memory access delay time of LOAD instructions with program execution might not always be possible. Due to the reuse of a limited number of registers and the dependence among data, there is an important constraint for instruction scheduling: the LOAD instruction for register Rᵢ cannot be moved beyond an instruction which uses the old value of register Rᵢ. Hence, there is a limit to the size of the gap between the load instruction for register Rᵢ and the first use of Rᵢ and this limit might not always be greater than the memory access time. As the memory access time relative to process cycle time increases, the chance of hiding memory access delay time completely from program execution decreases. However, this problem does not exist in cache management. Fetching a datum that is going to be put into register Rᵢ into the cache can occur in parallel with the access of register Rᵢ. Thus, data prefetching is still very useful for reducing processor idle time due to memory accesses.

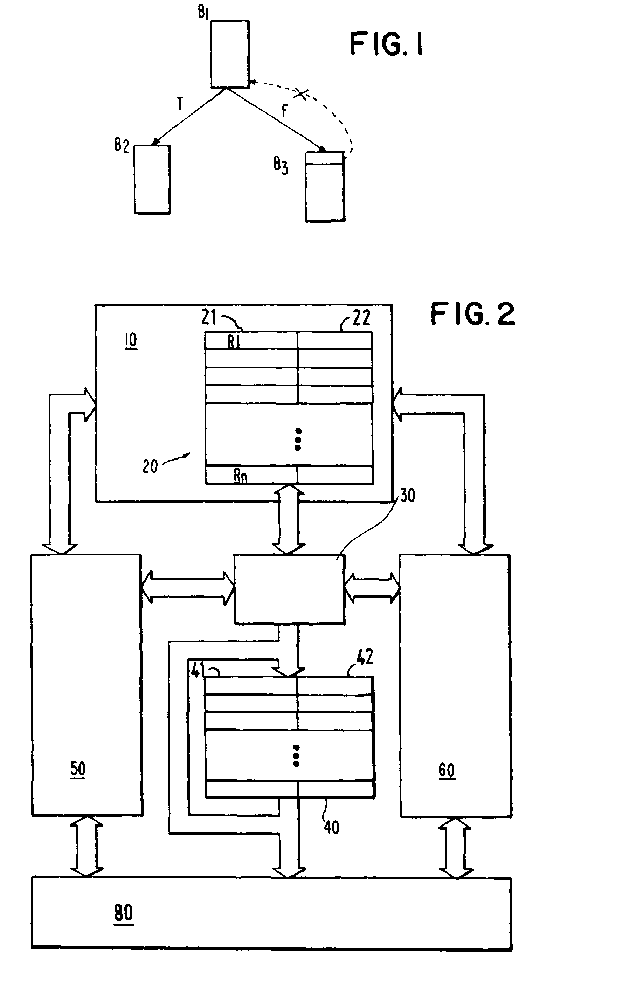

Third, moving LOAD instructions beyond a basic block may create the problem of correctness of program execution in Figure 1. If some instruction is moved from one basic block Bᵢ to another basic block Bⱼ, execution of any program control path which only executes block Bⱼ and not block Bᵢ will result in a wrong answer. This problem does not occur in cache management. If the cache management scheme tries to prefetch data according to one program execution path while the actual program execution is along another path, machine performance may be affected, but not correctness of program execution.

Fourth, due to the definition of the instruction set of a processor, separation of the LOAD for datum i from the first use of datum i might not always be possible. For example, in CISC (Complex Instructions Set Computer) Architectures, the operand of some arithmetic or logic operations can be of direct memory access. As a result, using compiler scheduling to overlap the memory operand access time with program execution becomes impossible.

An object of the invention is to provide a data cache prefetching scheme which fetches data which will be used in the near future.

Another object of the invention is to provide a data cache prefetching scheme which can be initiated automatically without using explicit cache control instructions and without waiting for a cache miss.

Another object of the invention is to reduce the average data cache miss penalty and if a cache miss cannot be avoided, to overlap memory access delay time with program execution.

Another object of the invention is to avoid prefetching data which will not be referenced during the time it is in a cache.

To attain the objects, the invention provides a method as defined in claim 4.

The computer according to the invention is characterized as described in the characterizing part of Claim 1.

With developments of new instruction cache designs (such as compiler-driven cache controls and multi-buffer on chip instruction cache) and branch target prediction techniques, instruction cache prefetching can be performed very accurately and much earlier than it is referenced. This results in the feasibility of deriving hints about how data is going to be referenced from prefetched instructions which have a high probability to be referenced in the immediate future: instructions in cache are likely to be executed, which means that data they refer to is likely to be used. This information is very important to data cache prefetching because it provides a better way of predicting data reference behaviour than simple guessing mechanisms such as one block look ahead or always prefetching, which are only good for sequential references.

This technique will be termed "current window data cache prefetching" or "CWD prefetching".

An "intelligent" instruction cache prefetching scheme (for example one of the schemes described in the European patent application No. 91201135.0 (PHA 21.597) is used to prefetch with high accuracy instructions which are expected to be executed in the next few cycles. Using special hardware support, these prefetched instructions are predecoded to find out all (if any) data references that might be made by the prefetched instructions. Any expected data references in the prefetched instructions, in turn, are prefetched into the data cache. As a consequence, if the data is not already in cache, it will be entered in the cache before the instruction is actually executed.

Thus, when the processor fetches the data for execution of the instruction, there will nearly always be a cache hit, because this data will have been prefetched into cache shortly before. The organization of the data cache will ensure that this data is consistent even if it is modified after it has been fetched into cache. Any failure to prefetch the proper data, for example due to an unpredictable branch in instruction flow, may still cause cache misses, which will be handled by the data cache, at the expense of a delay in data fetching, but not at the expense of correct instruction execution.

When the instruction which is expected to be executed in the next few cycles is determined by the prefetching unit of the instruction cache, it is sent to the cache control unit where it is predecoded to determine the address of any possible data reference. In the CWD prefetching scheme, the address modes of data references can be classified into three categories:

IMMEDIATE ADDRESSING MODE - In this addressing mode, the value of the operand is specified in the instruction. There is no operand address under this addressing mode.

DIRECT ADDRESSING MODE - In this addressing mode, the address of the operand is specified within the instruction. Assuming a non-self-modified instruction set, the operand address will not be changed during the program execution.

INDIRECT ADDRESSING MODE - In this addressing mode, the address of the operand is a function of the values of some registers (e.g. indexed or based registers) and/or memory locations. Since the values of registers can be modified during program execution, an operand address of this kind of data reference is not fixed. Usually, it will point to several different memory locations as the program executes.

Each of these three addressing modes of data references has different requirements to the hardware support for the address calculation for data references (other than the hardware support for the predecoding of prefetched instructions) in the CWD prefetching scheme.

The method comprises the steps of determining if any of the prefetched instructions in the instruction cache indirectly reference data on the basis of registers in the processing unit and, for each register in the processing unit, maintaining a count of the number of processor cycles which must pass before the register can be utilized for accurate indirect address calculation.

In this way, indirect references can be prefetched, and cache misses are nearly all avoided as long as instruction execution is sequential.

The method according to the invention comprises the step of maintaining data prefetch requests in a queue in association with a counter which indicates the number of processor cycles which must pass before each prefetching request can be implemented.
In this way the prefetching may be executed asynchronously from the decoding instructions. Moreover, in an embodiment of the method according to the invention the counter associated with a data prefetch request in the prefetch queue is initially set to the highest of the counter field maintained for registers used for indirect address calculation by the prefetched instruction requesting the data.

To execute the method according to the invention, the invention provides for a computer, comprising
- a processing unit,
- a main memory,
- prefetch means, arranged to prefetch and hold instructions for the processing unit from the main memory,
- data cache control means, arranged for determining if a reference to data is made in an instruction held in the instruction cache means, and for thereupon generating a data prefetch, for causing said data to be held in
- data cache means, holding data cached as representation for the main memory.
In this way, the processor is not required to take further action in order to attain efficient caching of data.

The data cache control means comprise queueing means for buffering a request for the data prefetch in a prefetch queue. In this way the data prefetch may be delayed in order to alleviate bus contention.

For immediate addressing mode data references, no additional hardware support is necessary because there is no operand address. For the direct addressing mode data references, again no additional hardware support is needed because the address of the operand is specified in the instruction and no calculation of the address is necessary in the CWD prefetching scheme.

The data cache control means are arranged for determining whether the instruction makes the reference to data in an indirect addressing mode, which makes use of information held in one or more registers comprised in the processing unit, and for thereupon determining the reference from the information held in said registers. Thus most references to data using indirect addressing are prevented from causing cache misses. Only if the registers change after the prefetch it will be possible that the processor, when it accesses the data, will cause a cache miss in the data caching means.

In an embodiment of a computer according to the invention each said registers have two access ports, a first port giving access to the processing unit and a second port giving access to the data cache control means.

For the indirect addressing mode of references, since the operand address is a function of the values of some registers such as the base register or the index register, the CWD prefetching scheme needs to access the register file in its address calculation. As a result, a multi-read-port register file is useful because the processing unit might need to access the register file at the same time the data cache control unit tries to read the register file for the address calculation of expected data references. Furthermore, if a read request and a write request arrive at the register simultaneously, the two requests need to be served serially. The write request first, followed by the read request. Some computation capability is also needed in the data cache control unit because of the address calculation.

Once the address Aᵢ of a data reference is a prefetched instruction in a prefetched instruction I is found, a data prefetching request for the content of location Aᵢ will be sent out as soon as possible so that there is more time to do the data prefetching. However, there are situations where the datum obtained by prefetching the content of a memory location Aᵢ is not what is actually referenced during the execution of instruction I.

If the references use the indirect addressing mode, calculation of addresses of a data reference Aᵢ in a prefetched instruction I is based on the values of some index and based registers, Rᵢ -- Rₙ In order to make sure that there is enough time to fetch the datum, the prefetching request needs to be issued a few instructions ahead. That means that there is a certain time gap between the issue of the prefetching request for the contents of memory location Aᵢ and the execution of instruction I. However, during the time gap, there is no guarantee that the values of some of the registers, Rₗ ... Rₙ will not be changed. If the values of all the registers that are used for the calculation of address Aᵢ remain unchanged, the prefetched datum is what is needed for the execution of instruction I. However, it is also possible that some of the registers used for the calculation of address Aᵢ are modified during the time gap. If this happens, the prefetched datum is not what is needed for the execution of instruction I. It is because old values of registers Rₗ ... Rₙ are used for the address calculation of data while new values of register Rₗ ... Rₙ are used for the address calculation of the actual data reference of a location Aᵢ.

This problem is accounted for in an embodiment of the computer according to the invention in which first counter means are associated with each said register respectively, for maintaining a respective count of processing cycles between a current processor unit instruction and a future modification of a content of the respective register by the processor unit.

The problem of indirect addressing is solved in a computer according to the invention in which comprises second counter means associated with the prefetch request in the prefetch queue, for indicating a number of processor cycles that must pass before the data prefetch can be accurately executed.

### DESCRIPTION OF THE DRAWINGS

The invention will be described by reference to the drawings in which:
Figure 1 illustrates difficulties with prior art register preloading techniques;
Figure 2 illustrates an accurate but somewhat complex embodiment of the invention; and
Figure 3 illustrates a simpler, but somewhat less accurate embodiment of the invention.

### DESCRIPTION OF PREFERRED EMBODIMENTS

Figure 2 illustrates an accurate, but somewhat complex, embodiment of the invention. A processing unit 10 of a computer includes a register file 20 in having register cells Rₗ ... Rₙ. Each register cell in the register file 20 has two fields, a data field and a counter field. As is usual, the data field of each register cell contains the value stored in that register. The counter field of a register is used to indicate the number of cycles that any data prefetching request must wait before it can be sent out, if the data prefetching request needs to use the register in its address calculation. The counter field is updated or set by a cache control unit 30. Whenever there is a write operation to the register in a prefetched instruction, its counter field is set T_{ahead} where T_{ahead} is the number of instructions that the CWD prefetching scheme looks ahead. This is to indicate that the new value of the register is available only T_{ahead} cycles later. A zero value in the counter field of a register means that its value is ready to be used for any address calculation needed for data prefetching. After each instruction execution, the counter field of each of the registers in the register file has to be updated by decrementing it by one (if it is not zero). A prefetch queue 40 is used to hold those data prefetching requests that are waiting to be sent out because, either the values for registers needed for their address calculation are not ready or because the bus is busy. When a data prefetching request is put into the prefetch queue 40 because the values of some registers needed for its address calculation are not ready, a counter field in a prefetch queue is set to the maximum of those values of the counter fields of registers used in its address calculation. This is to indicate that the time that the prefetching request has to wait before its address can be recalculated. Once the counter of a prefetching request in the prefetch queue is zero, its prefetching address will be recalculated and the request will be sent out. Note that after each instruction execution, the counter field of each prefetching request in the prefetch queue needs to be updated by decrementing it by one (if it is not zero), the same operation that is done with the counter fields of the registers.

Whenever a branch occurs, the counter fields of all registers are reset and all prefetching requests that are put in the prefetching queue before the branch will be removed. This is because all these counter fields and prefetching requests only show correct hints about the future data reference if program execution continues along the path that is immediately following the branch. Thus, once a branch takes place, all these hints become useless and must be removed.

The control mechanisms for the first embodiment of the CWD prefetching are summarized as follows:

Instruction I, which is expected to be executed in the next T_{ahead}^{th} cycle, is sent to the cache control unit either from the instruction cache 50 (if there is an instruction cache prefetch hit) or from the main memory 80 (if there is an instruction cache prefetch miss).

Prefetched instruction I is predecoded in the cache control unit 30 to find out any register that is going to be updated and any data reference that will be made if instruction I is executed.

If there is some register Rᵢ that is going to be updated by the execution of the prefetched instruction I, the counter field of register Rᵢ is set to T_{ahead}' ahead the number of cycles that the CWD prefetching scheme looks ahead.

If there is some data reference Dᵢ made by the prefetched instruction I, a data prefetching request might be issued. If the expected data reference Dᵢ is of immediate addressing mode, no prefetching request is sent. If the expected data reference Dᵢ is of direct addressing mode, data cache is checked to see if Dᵢ is already in cache 60. A prefetching request of Dᵢ is sent out only if there is a prefetch cache miss for Dᵢ. If the expected data reference Dᵢ is of indirect addressing mode and if the counter fields of all registers used in the address calculation of Dᵢ is zero, the data cache 60 is checked to see if Dᵢ is already in cache 60. If it is already in the cache, the prefetching request for Dᵢ will be aborted. If it is not in the cache, the prefetching request for Dᵢ will be sent out to the main memory as soon as the bus is free.

If there is some data reference Dᵢ made by the prefetched instruction I but some of the counter fields of the registers used in the address calculation of Dᵢ are not zero, the prefetching request for Dᵢ will be placed in a prefetch queue and its counter field is set to the maximum of those non-zero values of registers used in the address calculation of Dᵢ.

After each instruction, all counters, both in the register file 20 and in the prefetch queue 40 are decremented by one (if they are not already zero).

Whenever the counter field of a prefetching request in the prefetch queue is zero, its effective address is re-calculated and a data prefetching request is sent out using the new calculated address as soon as the bus is free.

If there is some new request for some functional unit of the system to use the bus while a data prefetching is in progress, the data prefetching will be aborted if one of the following situations occurs:
1. The new request is an instruction cache miss, or
2. The new request is a data cache miss and the new request is not the same as the current data prefetching request (control unit 30 keeps an account of what data prefetching request is being served and the unit will compare the two requests to see if they are the same) or
3. Other requests with higher interruptible priorities such as traps or unmaskable interrupts are generated by the system.

If a branch takes place, all prefetching requests that are-placed in a prefetch queue before execution of the branch instructions are removed from the prefetch queue.

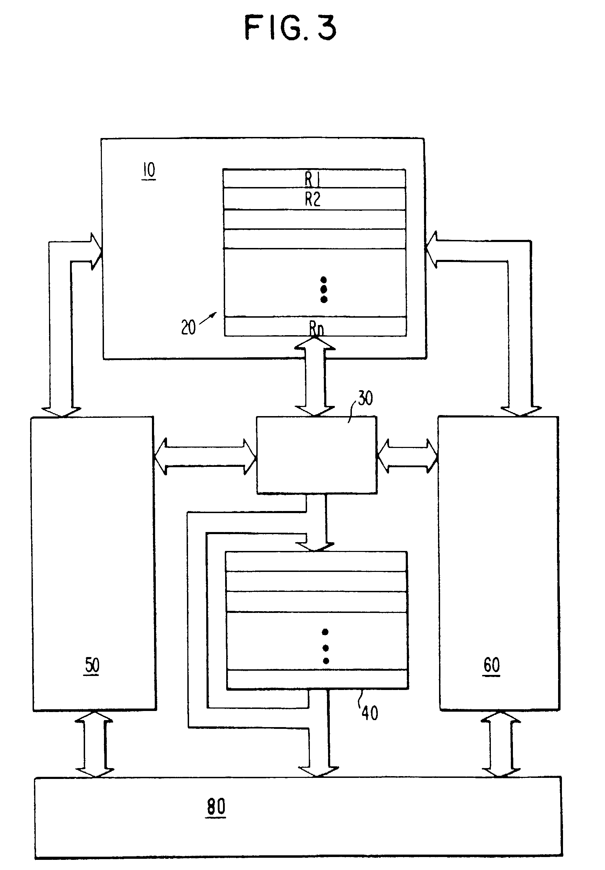

Figure 3 shows a simplified embodiment of a computer with CWD prefetching. The main advantage of the embodiment of Figure 3 over the embodiment of Figure 2 is that the control mechanisms and hardware support are much simpler. Compared with Figure 2, the distinct feature of the Figure 3 embodiment is that there is no bookkeeping of when registers are going to be updated and when prefetching requests can be sent out. The Figure 3 embodiment only tries to find out if there is any data reference in the prefetched instruction I. If there is some data reference in the instruction, its address Aᵢ is calculated immediately using the current values of registers in the register file if it is necessary. Then the cache is checked to see if the content of location Aᵢ are already in the cache. If there is a prefetch miss, a prefetch request for location Aᵢ is put in the prefetch queue and will be sent out once the bus is free. The control mechanism for the Figure 3 embodiment can be summarized as follows:

Instruction I, which is expected to be executed in the next T_{ahead}^{th} cycle, is sent to the data cache control unit either from the instruction cache (if there is an instruction cache prefetch hit) or from the main memory (if there is an instruction cache prefetch miss), where T_{ahead} is the number of cycles that the CWD prefetching scheme looks ahead.

Instruction I is predecoded in the cache control unit 30 and the address of any data reference Dᵢ made by instruction I is found using current values of some registers in a register file 20 if necessary.

If there is some data reference Dᵢ in instruction I, the data cache 60 is checked to see if Dᵢ is in the cache. If Dᵢ is already in the cache, the prefetching request is ignored. On the other hand, if data Dᵢ is not in the cache, a prefetching request for datum Dᵢ is put in the prefetch queue 40. Prefetching for datum Dᵢ will start once the bus is free.

If there is a new request for some functionally unit of the system to use the bus while a data prefetching is in progress, the data prefetching will be aborted if one of the following situations occurs:
1. The new request is an instruction cache miss, or
2. The new request is a data cache miss and the new request is not the same as the current data prefetching request, or
3. Other requests with higher interruptible priorities such as traps or unmaskable interrupts occur from the system.

If a branch takes place, all prefetching requests that are placed in the prefetch queue before execution of the branch are removed from the prefetch queue.

Since all bookkeepings of when registers are going to be updated and when the prefetching request can be sent out are not present in the Figure 3 embodiment, the prefetched datum due to instruction I might not be the same datum that is actually referenced during the execution of instruction I. However, the situation is not as bad as it might be. Since the time gap T_{ahead} between the prefetching of datum Dᵢ and the actual reference of Dᵢ is only a few instructions, the chances for this incorrect data prefetching are not high. The compiler can also help avoiding this situation by moving those instructions that update registers used for address calculation of the CWD prefetching scheme to occur earlier. Furthermore, a data reference pointer is usually updated by a constant. Thus, if old values of the registers are used in the address calculation for the data prefetching in the CWD scheme, the resulting reference address should point to a datum that has already been fetched into the data cache. In this case, no prefetching will be sent out and no data cache pollution will occur.

## Claims

1. A computer comprising
- a processing unit (10),
- a main memory (60),
- prefetch means (50) arranged to prefetch and hold instructions for the processing unit from main memory (60),
- data cache control means (30, 40) arranged for decoding prefetched instructions to determine if a reference to data is made in a prefetched instruction and for thereupon generating a data prefetch, for causing said data to be held in
- data cache means, holding data cached as representation for the main memory (60),
characterized in that the data cache control means (30,40) are arranged for determining whether said prefetched instruction makes the reference to data in an indirect addressing mode, which makes use of information held in one or more registers (21) comprised in the processing unit (10), and for thereupon determining the reference from the information held in said registers (21), first counter means (22) being associated with each said register respectively, for maintaining a respective count of processing cycles between a current processor unit instruction and a future modification of a content of the respective register (21) by the processing unit, the data cache control means (30, 40) putting the request in a prefetch queue if the reference to data is in the indirect addressing mode, second counter means (42) being associated with the prefetch request in the prefetch queue for indicating a number of processing cycles that must pass before the data prefetch can be accurately executed, the data cache control means (30, 40) initially setting said number to a highest of the respective counts associated with the one or more registers used to determine the reference to data.

2. A computer according to Claim 1, wherein the data cache control means (30, 40) are arranged for performing said determining for instructions at successive addresses subsequent to a program counter of the processing unit.

3. A computer according to Claim 1 or 2, comprising instruction cache means (50) arranged to prefetch and hold instructions for the processing unit from the main memory (60), the instruction cache means (50) sending the instruction to the data cache control means (50) for determining if a reference to data is made when the instruction cache means (50) expect the instruction to be executed.

4. A method of operating a digital computer having a processing unit and a main memory, the method comprising:
- prefetching processing instructions;
- decoding prefetched instructions expected to be executed in the next few cycles to determine if any data references are made in those instructions;
- generating a data prefetch request to prefetch the referenced data in case a reference is made, characterized in that it comprises the steps of
- maintaining counter fi.elds for registers in the processing unit, containing the number of processor cycles which must pass before respective registers can be utilized for indirect address calculation,
- determining if any of the prefetched instructions indirectly reference data on the basis of registers in the processing unit;
- maintaining a queue of generated data prefetch requests;
- associating each data prefetch request in the queue with a counter which indicates the number of processor cycles which must pass before that prefetching request can be implemented, and setting said number initially to a highest of the counter fields maintained for registers used for indirect address calculation by the prefetched instruction requesting the data and
- prefetching data from the main memory on the basis of requests in the queue when said number indicates that the prefetching request can be implemented.

5. A method according to Claim 4, wherein the instructions are prefetched into an instruction cache and decoded to determine whether any data references are made in response to prefetching into the instruction cache.

## Patentansprüche

1. Rechner, der folgendes umfaßt:
- eine Verarbeitungseinheit (10),
- einen Hauptspeicher (60),
- Vorabrufmittel (50), die vorgesehen sind, um Befehle für die Verarbeitungseinheit aus dem Hauptspeicher (60) abzurufen und zu halten,
- Datencache-Steuermittel (30, 40), die vorgesehen sind, um festzustellen, ob in einem vorabgerufenen Befehl ein Verweis auf Daten erfolgt, und um daraufhin einen Daten-Vorabruf zu erzeugen, damit die genannten Daten gehalten werden in
- Datencache-Mitteln, die die Cache-Daten als Darstellung für den Hauptspeicher festhalten,
dadurch gekennzeichnet, daß die Datencache-Steuermittel (30, 40) vorgesehen sind, um festzustellen, ob der genannte vorabgerufene Befehl den Verweis auf Daten in einem indirekten Adressiermodus macht, der die Informationen nutzt, welche sich in einem oder mehreren Registern (21) befinden, die in der Verarbeitungseinheit (10) enthalten sind, und um daraufhin den Verweis ausgehend von den in den genannten Registern (21) enthaltenen Informationen zu bestimmen, wobei zu jedem genannten Register jeweils erste Zählermittel (22) gehören, um die Anzahl der Verarbeitungszyklen zwischen einem aktuellen Befehl der Verarbeitungseinheit und einer zukünftigen Modifikation des Inhalts des betreffenden Registers (21) durch die Verarbeitungseinheit zu zählen, wobei die Datencache-Steuermittel (30, 40) die Anforderung in eine Vorabrufschlange bringen, wenn der Verweis auf Daten im indirekten Adressiermodus erfolgt, und wobei zu jeder Vorabruf-Anforderung in der Vorabrufschlange zweite Zählermittel (42) gehören, um die Anzahl der Verarbeitungszyklen zu zählen, die verstreichen müssen, bevor der Datenvorabruf genau ausgeführt werden kann, wobei die Datencache-Steuermittel (30, 40) die genannte Anzahl zunächst auf die jeweiligen Zählwerte setzen, die zu dem einen oder mehreren Registern gehören, welche zur Bestimmung des Verweises auf Daten benutzt werden.

2. Rechner nach Anspruch 1, wobei die Datencache-Steuermittel (30, 40) vorgesehen sind, um die genannte Bestimmung für Befehle an aufeinanderfolgenden Adressen im Anschluß an einen Programmzähler der Verarbeitungseinheit auszuführen.

3. Rechner nach Anspruch 1 oder 2, mit Befehlscache-Mitteln (50), die vorgesehen sind, um Befehle für die Verarbeitungseinheit aus dem Hauptspeicher (60) vorabzurufen und zu halten, wobei die Befehlscache-Mittel (50) den Befehl an die Datencache-Steuermittel (30, 40) senden, um festzustellen, ob ein Verweis auf Daten erfolgt, wenn die Befehlscache-Mittel (50) die Ausführung des Befehls erwarten.

4. Verfahren zum Betreiben eines digitalen Rechners mit einer Verarbeitungseinheit und einem Hauptspeicher, wobei das Verfahren folgende Schritte umfaßt:
- Vorabrufen von Verarbeitungsbefehlen;
- Decodieren von vorabgerufenen Befehlen, die voraussichtlich in den nächsten Zyklen ausgeführt werden, um festzustellen, ob in diesen Befehlen ein Datenverweis erfolgt;
- Erzeugen einer Datenvorabruf-Anforderung, um die verwiesenen Daten vorabzurufen, wenn ein Verweis erfolgte, dadurch gekennzeichnet, daß sie folgende Schritte umfaßt:
- Aufrechterhalten von Zählerfeldern für Register in der Verarbeitungseinheit, wobei die Zählerfelder die Anzahl der Verarbeitungszyklen enthalten, die verstreichen müssen, bevor die entsprechenden Register für die indirekte Adressenberechnung benutzt werden können,
- Feststellen, ob ein vorabgerufener Befehl auf der Basis von Registern in der Verarbeitungseinheit indirekt auf Daten verweist;
- Aufrechterhalten einer Schlange von generierten Datenvorabruf-Anforderungen;
- jeder Datenvorabruf-Anforderung in der Schlange einen Zähler zuordnen, der die Anzahl der Verarbeitungszyklen angibt, welche verstreichen müssen, bevor diese Vorabruf-Anforderung implementiert werden kann, und zunächst Einstellen der genannten Anzahl auf das höchste der Zählerfelder, die für Register geführt werden, die für die indirekte Adressenberechnung durch die Anforderung von Daten durch den vorabgerufenen Befehl benutzt werden.
- Vorabrufen der Daten aus dem Hauptspeicher auf der Basis der Anforderungen in der Schlange, wenn die genannte Anzahl angibt, daß die Vorabruf-Anforderung implementiert werden kann.

5. Verfahren nach Anspruch 4, wobei die Befehle in einen Befehlscache vorabgerufen werden und decodiert werden, um festzustellen, ob Datenverweise in Reaktion auf das Vorabrufen in den Befehlscache gemacht werden.

## Revendications

1. Ordinateur comportant
- une unité de traitement (10),
- une mémoire centrale (60),
- des moyens de préextraction (50) agencés pour préextraire et stocker des instructions pour l'unité de traitement à partir de la mémoire centrale (60),
- des moyens de commande d'antémémoire de données (30, 40) agencés pour décoder les instructions préextraites pour déterminer si une référence à des données est faite dans une instruction préextraite, et pour produire ensuite une préextraction de données, pour amener lesdites données à être stockées dans
- des moyens d'antémémoire de données, stockant des données mises en antémémoire en tant que représentation pour la mémoire centrale (60), caractérisé en ce que les moyens de commande d'antémémoire de données (30,40) sont agencés pour déterminer si ladite instruction préextraite fait référence à des données dans un mode d'adressage indirect, qui utilise l'information stockée dans un ou plusieurs registres (21) que comporte l'unité de traitement (10), et pour déterminer ensuite la référence à partir de l'information stockée dans lesdits registres (21), les premiers moyens de comptage (22) étant associés respectivement à chaque registre, dans le but de conserver un total respectif de cycles de traitement entre une instruction actuelle d'unité de traitement et une modification ultérieure d'un contenu du registre respectif (21) par l'unité de traitement, les moyens de commande d'antémémoire de données (30, 40) plaçant la demande dans une file d'attente de préextraction si la référence aux données est dans le mode d'adressage indirect, les deuxièmes moyens de comptage (42) étant associés à la demande de préextraction dans la file d'attente de préextraction pour indiquer un nombre de cycles de traitement qui être effectué avant que la préextraction de données ne soit exécutée avec précision, les moyens de commande d'antémémoire de données (30, 40) réglant initialement ledit nombre à une valeur maximale des totalisations respectives, associées à un ou plusieurs registres utilisés pour déterminer la référence aux données.

2. Ordinateur suivant la revendication 1, dans lequel les moyens de commande d'antémémoire de données (30, 40) sont agencés pour accomplir ladite détermination des instructions aux adresses successives suivant un compteur de programme de l'unité de traitement.

3. Ordinateur suivant la revendication 1 ou 2, comportant des moyens d'antémémoire d'instructions (50) agencés pour préextraire et stocker des instructions pour l'unité de traitement à partir de la mémoire centrale (60), les moyens d'antémémoire d'instructions (50) émettant l'instruction en direction des moyens de commande d'antémémoire de données (50) en vue de déterminer si une référence à des données est faite lorsque les moyens d'antémémoire d'instructions (50) s'attendent à ce que l'instruction soit exécutée.

4. Procédé d'exploitation d'un ordinateur numérique doté d'une unité de traitement et d'une mémoire centrale, le procédé comportant les étapes suivantes :
- préextraire des instructions de traitement,
- décoder des instructions préextraites dont on exempte l'exécution au cours des quelques cycles ultérieurs afin de déterminer si des références de données particulières sont réalisées dans ces instructions;
- générer une demande de préextraction de données pour préextraire les données référencées lorsqu'une référence est faite, caractérisé en ce qu'il comporte les étapes suivantes :
- maintenir des champs de comptage pour registres dans l'unité de traitement, lesquels contiennent le nombre de cycles de processeur qui doit être effectué avant que les registres respectifs ne puissent être utilisés pour calculer l'adresse indirecte,
- déterminer si une quelconque des instructions préextraites fait indirectement référence à des données en s'appuyant sur les registres dans l'unité de traitement;
- maintenir une file d'attente des demandes de préextraction de données produites;
- associer chaque demande de préextraction de données dans la file d'attente à un compteur qui indique le nombre de cycles de processeur qui doit être effectué avant que cette demande de préextraction puisse être mise en oeuvre, et définir ledit nombre initialement à une valeur maximale des champs de compteur maintenue pour les registres utilisés pour le calcul de l'adresse indirecte par l'instruction préextraite demandant les données, et
- préextraire les données à partir de la mémoire centrale en s'appuyant sur les demandes dans la file d'attente lorsque ledit nombre indique que la demande de préextraction peut être mise en oeuvre.

5. Procédé suivant la revendication 4, dans lequel les instructions sont préextraites dans une antémémoire d'instructions et décodées en vue de déterminer si une quelconque référence de données est faite en réaction à une préextraction dans l'antémémoire d'instructions.
